# EUROPÄISCHE PATENTSCHRIFT

(11) **EP 0 604 670 B1**
(45) Veröffentlichungstag und Bekanntmachung des Hinweises auf die Patenterteilung: **20.11.1996**
(21) Anmeldenummer: 92121714.7
(22) Anmeldetag: 19.12.1992
(51) Int. Cl.: G01F 23/00

(54) **Vorrichtung zur Messung des Pegelstands eines flüssigen Mediums in einem Behälter**
Device for measuring the level of a fluid in a container
Dispositif pour la mesure des niveaux d'un fluide dans un réservoir

(43) Veröffentlichungstag der Anmeldung: 06.07.1994
(73) Patentinhaber: HELIOS AG Niveaumessung und Wägetechnik, CH-4106 Therwil (CH)
(72) Erfinder: Gempp, Peter, CH-4153 Reinach (CH)

(56) Entgegenhaltungen:
- REGELUNGSTECHNISCHE PRAXIS, Bd. 17, Nr. 2, 1975, München, SE, Seiten M1-M7; G. STROHRMANN : "Lösungen von MSR-Aufgaben"
- AUTOMATISIERUNGSTECHNISCHE PRAXIS - ATP, Bd. 34, Nr. 6, Juni 1992, München, DE, Seiten 299-313; G. STROHRMANN : "ATP-Marktanalyse Füllstandmesstechnik"

## Beschreibung

Die Erfindung betrifft eine Vorrichtung zur Messung des Pegelstands eines flüssigen Mediums in einem Behälter, mit einem je nach Pegelstand mehr oder weniger tief in das flüssige Medium eintauchenden Auftriebskörper und mit einem mit dem Auftriebskörper gekoppelten Messwandler, der die auf den Auftriebskörper wirkende, pegelstandsabhängige Auftriebskraft in ein elektrisches Signal umwandelt, welches ein Mass für den Pegelstand des flüssigen Mediums im Behälter bildet.

Für in der Verfahrenstechnik und anderen Anwendungsbereichen vielfach erforderliche Pegelstands- oder Niveaumessungen stehen eine Reihe von geeigneten Geräten zur Verfügung, die auf den verschiedensten Messprinzipien beruhen. Dazu gehören Geräte mit Schwimmern, Verdrängungs- oder Auftriebskörpern, potentiometrischen oder kapazitiven Sonden, Drucksonden und Ultraschallsensoren.

Die vorliegende Erfindung befasst sich mit einer Messvorrichtung, deren Messprinzip auf der Auftriebswirkung eines in das Medium, dessen Pegelstand zu messen ist, eintauchenden Verdrängungs-oder Auftriebskörpers beruht.

Bei einem bekannten Gerät dieser Art ist auf der Oberseite oder dem Deckel des Behälters, in dem sich das Medium befindet, dessen Niveau bzw. Pegel zu messen ist, ein dichtes und druckfestes Messgehäuse angeordnet, welches mit dem Behälter durch eine Öffnung in Verbindung steht. Im Behälter ist ein Auftriebskörper vertikal beweglich angeordnet, der je nach Füllstand des Mediums mehr oder weniger tief in dieses eintaucht und entsprechend eine unterschiedliche Auftriebskraft erfährt. Der Auftriebskörper ist durch eine im Messgehäuse angeordnete Feder belastet und bewegt über ein durch die Öffnung hindurchgreifendes Gestänge je nach Pegelstand ein im Messgehäuse befindliches Indikatorelement, z.B. einen Magneten oder einen Ferritkern. Die Stellung bzw. Bewegung des Indikatorelements wird durch ein ausserhalb des Messgehäuses angeordnetes Messystem, z.B. einen magnetisch gekoppelten Zeiger oder ein induktives System erfasst und als Mass für den Pegelstand ausgewertet bzw. angezeigt.

Diese bekannte Vorrichtung ist konstruktiv relativ aufwendig und setzt ausserdem voraus, dass sich der Auftriebskörper über eine nicht zu vernachlässigende Wegstrecke bewegen können muss.

Durch die vorliegende Erfindung soll nun eine Pegelstandsmessvorrichtung der gattungsgemässen Art dahingehend verbessert werden, dass einerseits eine praktisch statische Messung, bei der sich der Auftriebskörper praktisch nicht bewegt, ermöglicht wird, und dass andererseits eine konstruktiv einfache und vor allem stopfbuchslose Übertragung der auf den Auftriebskörper einwirkenden Auftriebskraft aus dem Behälter erreicht wird, wobei ferner das Messergebnis unabhängig vom im Behälter herrschenden Druck sein soll.

Die diese Aufgabe lösende Vorrichtung ist erfindungsgemäss dadurch gekennzeichnet, dass der Messwandler ein im wesentlichen gerades, einseitig eingespanntes Messrohr und einen in diesem im wesentlichen koaxial angeordneten, ebenfalls einseitig eingespannten Kopplungsstab umfasst, wobei das Messrohr mit seinem einen Ende bewegungsfest und dicht an eine seitliche Öffnung des Behälters angeflanscht und an seinem anderen, freien Ende dicht und druckfest verschlossen ist, und wobei der Kopplungsstab mit seinem einen Ende bewegungsfest mit dem freien Ende des Messrohrs verbunden ist und mit seinem anderen, freien Ende durch die seitliche Öffnung des Behälters in diesen hineinragt, dass der Auftriebskörper so mit dem freien Ende des Kopplungsstabs verbunden ist, dass die auf ihn wirkende, pegelstandsabhängige Auftriebskraft auf den Kopplungsstab und durch diesen auf das Messrohr übertragen wird und dieses pegelstandsabhängig mehr oder weniger verbiegt, dass auf dem Messrohr wenigstens ein Dehnmesselement zur Erfassung der Verbiegung des Messrohrs angeordnet ist, und dass der Messwandler ferner eine mit dem wenigstens einen Dehnmesselement zusammenarbeitende elektrische Messschaltung aufweist, welche ein der Verbiegung des Messrohrs und damit dem Pegelstand des flüssigen Mediums im Behälter entsprechendes elektrisches Signal erzeugt.

Gemäss dem wesentlichsten Gedanken der Erfindung erfolgt also die Kraftübertragung nach aussen stopfbuchslos durch zwei gekoppelte, koaxiale Biegebalken, wobei deren Verbiegung ein Mass für den Pegelstand im Behälter bildet und durch Dehnmesselemente erfasst wird. Durch die erfindungsgemässe Art der Kraftübertragung ist die Messung unabhängig vom im Behälter herrschenden Druck. Durch die Verwendung von Dehnmesselementen kann die für die Kraftmessung erforderliche Bewegung des Auftriebskörpers extrem klein gehalten werden, sodass die Messung praktisch statisch erfolgt.

Gemäss einer vorteilhaften Ausgestaltung der Erfindung ist vorgesehen, dass auf dem Messrohr zwei mit der elektrischen Messschaltung zusammenwirkende Dehnmesselemente im Streckungs- bzw. Stauchungsbereich des Messrohrs angeordnet sind.

Dabei ist es insbesondere zweckmässig, wenn auf dem Messrohr an zwei gegenüberliegenden Stellen in den neutralen Zonen des Messrohrs zwei weitere mit der Messschaltung zusammenwirkende Dehnmesselemente angeordnet sind.

Nach einer besonders bevorzugten Ausführungsform ist vorgesehen, dass jedes Dehnmesselement aus einer Brückenschaltung von einzelnen Dehnmessstreifen besteht, wobei vorteilhafterweise die Dehnmesselemente elektrisch parallel geschaltet sind.

Durch den Einsatz mehrerer, vorzugsweise zu einer Brücke zusammengeschalteter Dehnmesselemente kann auf einfache Weise eine temperaturunabhängige Messung erreicht werden.

Eine besonders zweckmässige und vorteilhafte Ausgestaltungsvariante der erfindungsgemässen Vorrichtung ist dadurch gekennzeichnet, dass sie einen zweiten Auftriebskörper sowie einen mit diesem kinematisch gekoppelten zweiten Kopplungsstab und ein entsprechendes zweites Messrohr mit wenigstens einem Dehnmesselement aufweist, und dass die Messschaltung auch mit dem Dehnmesselement des zweiten Messrohrs zusammenwirkt und dazu ausgebildet ist, ein vom spezifischen Gewicht des flüssigen Mediums im Behälter unabhängiges Pegelstandssignal zu erzeugen.

Im folgenden wird die Erfindung anhand der Zeichnung näher erläutert. Es zeigen:
- Fig.1: eine schematische Schnittdarstellung eines ersten Ausführungsbeispiels der erfindungsgemässen Vorrichtung,
- Fig.2: ein elektrisches Schaltungs-Detail und
- Fig.3: eine schematische Darstellung eines zweiten Ausführungsbeispiels der erfindungsgemässen Vorrichtung.

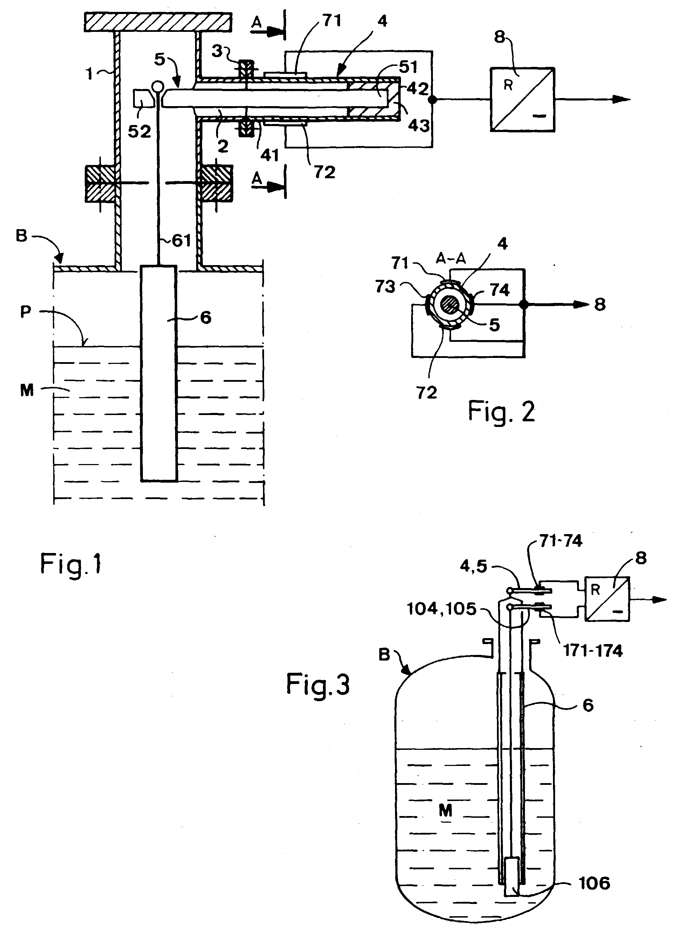

Der wesentliche konstruktive Aufbau der erfindungsgemässen Pegelstandsmessvorrichtung ist am besten aus Fig.1 erkennbar.

Ein als Ganzes mit B bezeichneter Behälter, beispielsweise ein Prozess-Behälter für chemische Reaktionen, weist an seiner Oberseite einen Stutzen 1 auf. Im Behälter B befindet sich ein flüssiges Medium M, dessen mit P bezeichneter Pegelstand durch die Vorrichtung zu bestimmen ist. Seitlich am Stutzen 1 ist eine Öffnung 2 angeordnet, die mit einem Flansch 3 versehen ist.

Am Flansch 3 ist mit seinem einen Ende 41 ein Messrohr 4 dicht, druckfest und bewegungsstarr so montiert (angeflanscht), dass es im wesentlichen etwa horizontal vom Behälter B bzw. dessen Stutzen 1 absteht. Das andere, freie Ende 42 des Messrohrs 4 ist mittels eines eingepressten oder eingeschweissten Pfropfens 43 dicht und druckfest verschlossen.

Im Inneren des Messrohrs 4 ist im wesentlichen koaxial ein länglicher Kopplungsstab 5 angeordnet. Dieser ist mit seinem einen Ende 51 bewegungsstarr mit dem Pfropfen 43 und damit mit dem freien Ende 42 des Messrohrs 4 verbunden. Das andere, freie Ende 52 des Kopplungsstabs 5 ragt durch die Öffnung 2 des Behälters bis etwa in die Mitte des Stutzens 1 hinein.

Am freien Ende 52 des Kopplungsstabs 5 ist über eine Verbindungsstange 61 ein langgestreckter, im wesentlichen zylindrischer Auftriebskörper 6 aufgehängt, welcher sich im wesentlichen über die gesamte nutzbare Höhe des Behälters B erstreckt und je nach Pegelstand mehr oder weniger tief in das im Behälter B befindliche flüssige Medium M eintaucht.

Auf dem Messrohr 4 sind aussen auf seinem Umfang in der Nähe der Einspannstelle, d.h. in der Nähe des Flansches 3, oben, unten und an den beiden Seiten vier Dehnmesselemente 71-74 angeordnet (siehe auch Fig.2), welche je aus einer Brückenschaltung von einzelnen Dehnmessstreifen bestehen und elektrisch parallel geschaltet sind. Die Dehnmesselemente 71-74 sind an eine elektrische Messschaltung 8 angeschlossen, welche aus den von den Dehnmesselementen erfassten Längenänderungen ein elektrisches Messignal erzeugt.

Die Funktionsweise der vorstehend beschriebenen Pegelmessvorrichtung ist wie folgt:

Der in das flüssige Medium M im Behälter B eintauchende Auftriebskörper 6 erfährt je nach Pegelstand und entsprechender Eintauchtiefe eine verschieden grosse Auftriebskraft. Diese wird über die Verbindungsstange 61 als Querkraft in das freie Ende 52 des Kopplungsstabs 5 eingeleitet und erzeugt ein Biegemoment in diesem. Dieses Biegemoment wird über das eingespannte Ende 51 des Kopplungsstabs 5 auf das freie Ende 42 des Messrohrs 4 übertragen und bewirkt eine entsprechende Verbiegung des mit seinem Ende 41 einseitig eingespannten Messrohrs 4. Die Verbiegung des Messrohrs 4 wird von den Dehnmesselementen 71-74 erfasst, und die mit ihnen zusammenwirkende elektrische Messschaltung 8 erzeugt ein entsprechendes elektrisches Messignal, welches ein Mass für den Pegelstand des flüssigen Mediums M im Behälter B darstellt. Das elektrische Messignal kann in beliebiger, an sich bekannter Weise weiterverarbeitet und ausgewertet werden.

Der Kopplungsstab 5 und das Messrohr 4 mit den auf ihm angeordneten Dehnmesselementen 71-74 bilden zusammen mit der elektrischen Schaltung 8 einen Messwandler, der aus der auf den Auftriebskörper 6 einwirkenden, pegelstandsabhängigen Auftriebskraft ein dem Pegelstand des Mediums M im Behälter B entsprechendes elektrisches Messignal erzeugt.

Die Dehnmesselemente 71-74 sind, wie aus Fig.2 hervorgeht, mit Vorzug in den Streckungs- und Stauchungszonen (oben und unten) sowie in den neutralen Zonen (zu beiden Seiten) des Messrohrs 4 angeordnet. Auf diese Weise ist eine besonders exakte Erfassung der Verbiegung des Messrohrs 4 möglich. Selbstverständlich können auch andere Anordnungen der Dehnmesselemente vorgesehen sein. Die Dehnmesselemente 71-74 selbst bestehen vorzugsweise je aus einer Brückenschaltung von vier Dehnmessstreifen. Solche Brückenschaltungen sind konventionell und erlauben eine einfache und zuverlässige Temperaturkompensation. Selbstverständlich sind auch andere Konfigurationen der Dehnmesselemente möglich. Eine übersichtliche Zusammenstellung des Aufbaus von Dehnmesselementen, ihrer elektrischen Beschaltung und ihrer Anwendungsmöglichkeiten findet sich z.B. in der Artikel-Serie "Dehnungsabhängige Sensoren" in der Zeitschrift "TECHNICA", Hefte 9/91-25/91.

Die elektrische Messschaltung 8 ist eine beliebige der in Verbindung mit Dehnmessstreifen üblichen elektrischen Schaltungsanordnungen und bedarf keiner näheren Erläuterung.

Das von der Messschaltung 8 erzeugte elektrische Signal ist normalerweise so aufbereitet, dass es ein direktes Mass für den Pegelstand des flüssigen Mediums im Behälter darstellt. Selbstverständlich kann das elektrische Signal auch als Mass für andere, mit dem Pegelstand zusammenhängende oder von diesem ableitbare Grössen, beispielsweise etwa dem Füllvolumen des Mediums oder dem Gewicht des im Behälter befindlichen Mediums aufbereitet werden. Entsprechend kann die erfindungsgemässe Pegelstandsmessvorrichtung auch als Volumen- oder Gewichtsmesseinrichtung eingesetzt werden.

Die in Fig.1 dargestellte Vorrichtung setzt beim Einsatz als Füllstands- bzw. Pegelstandsmesseinrichtung voraus, dass das spezifische Gewicht des im Behälter B befindlichen Mediums M bekannt ist (Die Auftriebskraft hängt von der Differenz der spezifischen Gewichte des Auftriebskörpers und des Mediums ab). Bei einer Änderung des Mediums muss die gesamte Vorrichtung neu kalibriert werden. Beim Einsatz als Gewichtsmesseinrichtung ist dies natürlich nicht der Fall. Die im folgenden anhand der Fig.3 beschriebene zweite Ausführungsvariante der erfindungsgemässen Vorrichtung ist unabhängig vom spezifischen Gewicht des flüssigen Mediums im Behälter und braucht im Prinzip nur ein einziges Mal kalibriert zu werden.

Bei dieser Vorrichtungsvariante sind im Behälter B zwei Auftriebskörper 6 und 106 angeordnet, die je an einem separaten Kopplungsstab 5 bzw. 105 aufgehängt sind. Die beiden Kopplungsstäbe 5 und 105 sind je in einem separaten Messrohr 4 bzw. 104 analog Fig.1 eingespannt, und jedes der beiden Messrohre 4 und 104 ist analog Fig.1 bewegungsstarr im Bereich einer seitlichen Öffnung eines hier nicht gezeigten Stutzens des Behälters B einseitig eingespannt und mit Dehnmesselementen 71-74 bzw. 171-174 analog Fig.1 versehen, welche mit einer gemeinsamen Messschaltung 8 verbunden sind.

Der Auftriebskörper 6 ist rohrförmig ausgebildet und erstreckt sich über praktisch die gesamte nutzbare Füllhöhe des Behälters B. Er hat dieselbe Funktion wie beim Ausführungsbeispiel nach Fig.1 und erzeugt eine variable, vom Pegelstand des Mediums im Behälter abhängige Auftriebskraft. Der zweite Auftriebskörper 106 ist im Inneren des ersten Auftriebskörpers 6 in der Nähe des Behälterbodens angeordnet. Unter den im praktischen Einsatz üblichen Bedingungen taucht er stets vollständig in das Medium ein und erzeugt dadurch unabhängig vom Pegelstand eine konstante Auftriebskraft, welche von den Dehnmesselementen 171-174 des zweiten Messrohrs 104 erfasst und von der Messschaltung 8 zur Kompensation des Einflusses des spezifischen Gewichts des Mediums ausgewertet wird. Kompensationsschaltungen dieser Art sind an sich bekannt und bedürfen daher keiner näheren Erläuterung.

Die vorstehend beschriebene erfindungsgemässe Pegelstandsmessvorrichtung ist mechanisch besonders einfach und solide. Sie erlaubt eine stopfbüchsenlose Kraftübertragung nach aussen und eine praktisch statische Messung. Das Messergebnis ist unabhängig von den im Behälter herrschenden Druckverhältnissen und kann durch einfache elektrische Schaltungstechniken leicht temperaturkompensiert werden.

## Patentansprüche

1. Vorrichtung zur Messung des Pegelstands eines flüssigen Mediums in einem Behälter, mit einem je nach Pegelstand mehr oder weniger tief in das flüssige Medium (M) eintauchenden Auftriebskörper (6) und mit einem mit dem Auftriebskörper gekoppelten Messwandler (4,5,71-74,8), der die auf den Auftriebskörper wirkende, pegelstandsabhängige Auftriebskraft in ein elektrisches Signal umwandelt, welches ein Mass für den Pegelstand des flüssigen Mediums im Behälter (B) bildet,
dadurch gekennzeichnet,
dass der Messwandler (4,5,71-74,8) ein im wesentlichen gerades, einseitig eingespanntes Messrohr (4) und einen in diesem im wesentlichen koaxial angeordneten, ebenfalls einseitig eingespannten Kopplungsstab (5) umfasst,
wobei das Messrohr (4) mit seinem einen Ende (41) bewegungsfest und dicht an eine seitliche Öffnung (2) des Behälters (B) angeflanscht und an seinem anderen, freien Ende (42) dicht und druckfest verschlossen ist, und
wobei der Kopplungsstab (5) mit seinem einen Ende (51) bewegungsfest mit dem freien Ende (42) des Messrohrs (4) verbunden ist und mit seinem anderen, freien Ende (52) durch die seitliche Öffnung (2) des Behälters (B) in diesen hineinragt,
dass der Auftriebskörper (6) so mit dem freien Ende (52) des Kopplungsstabs (5) verbunden ist, dass die auf ihn wirkende, pegelstandsabhängige Auftriebskraft auf den Kopplungsstab (5) und durch diesen auf das Messrohr (4) übertragen wird und dieses pegelstandsabhängig mehr oder weniger verbiegt,
dass auf dem Messrohr (4) wenigstens ein Dehnmesselement (71) zur Erfassung der Verbiegung des Messrohrs (4) angeordnet ist, und
dass der Messwandler (4,5,71-74,8) ferner eine mit dem wenigstens einen Dehnmesselement (71) zusammenarbeitende elektrische Messschaltung (8) aufweist, welche ein der Verbiegung des Messrohrs (4) und damit dem Pegelstand des flüssigen Mediums (M) im Behälter (B) entsprechendes elektrisches Signal erzeugt.

2. Vorrichtung nach Anspruch 1, dadurch gekennzeichnet, dass auf dem Messrohr (4) zwei mit der elektrischen Messschaltung (8) zusammenwirkende Dehnmesselemente (71,72) im Streckungs- bzw. Stauchungsbereich des Messrohrs angeordnet sind.

3. Vorrichtung nach Anspruch 2, dadurch gekennzeichnet, dass auf dem Messrohr (4) an zwei gegenüberliegenden Stellen in den neutralen Zonen des Messrohrs zwei weitere mit der Messschaltung (8) zusammenwirkende Dehnmesselemente (73,74) angeordnet sind.

4. Vorrichtung nach Anspruch 3, dadurch gekennzeichnet, dass jedes Dehnmesselement (71-74) aus einer Brückenschaltung von einzelnen Dehnmessstreifen besteht.

5. Vorrichtung nach Anspruch 4, dadurch gekennzeichnet, dass die Dehnmesselemente (71-74) elektrisch parallel geschaltet sind.

6. Vorrichtung nach einem der vorangehenden Ansprüche, dadurch gekennzeichnet, dass sie einen zweiten Auftriebskörper (106) sowie einen mit diesem kinematisch gekoppelten zweiten Kopplungsstab (105) und ein entsprechendes zweites Messrohr (104) mit wenigstens einem Dehnmesselement (171) aufweist, und dass die Messschaltung (8) auch mit dem Dehnmesselement (171) des zweiten Messrohrs (104) zusammenwirkt und dazu ausgebildet ist, ein vom spezifischen Gewicht des flüssigen Mediums (M) im Behälter (B) unabhängiges Pegelstandssignal zu erzeugen.

## Claims

1. Device for measuring the level of a liquid medium in a container, with a buoyancy body (6) immersed more or less deep in the liquid medium (M) depending on its level, and a transducer (4, 5, 71-74, 8) coupled with the buoyancy body, converting the upward force acting on the buoyancy body depending on the level into an electrical signal, which provides a measure for the level of the liquid medium in the container (B),
characterized in that
the transducer (4, 5, 71-74, 8) comprises an essentially straight measuring tube (4) constrained at one end, and an essentially coaxial coupling rod (5) inside it, also constrained at one end, whereby the measuring tube (4) is flanged rigidly and tightly sealed to a side opening (2) of the container (B) at one end (41), while its other, free end (42) is sealed and pressure-tight and whereby the coupling rod (5) is joined rigidly to the free end (42) of the measuring tube (4) at ist one end (51), while its other, free end (52) protrudes into the container (B) through the side opening (2) of the container,
that the buoyancy body (6) is joined to the free end (52) of the coupling rod (5) so that the upward force acting on it according to the level is transmitted to the coupling rod (5) and through this onto the measuring tube (4), bending this more or less depending on the level;
that arranged on the measuring tube (4) is at least one extension measuring element (71) for detecting the flexure of the measuring tube (4), and
that the transducer (4, 5, 71-74, 8) also has an electrical measuring circuit (8) interacting with said at least one extension measuring element (71), generating a corresponding electrical signal from the flexure of the measuring tube (4) and hence from the level of the liquid medium (M) in the container (B).

2. Device according to C!aim 1, characterized in that two extension measuring elements (71, 72) are arranged on the measuring tube (4) in the extension and compression zones of the latter and interacting with the electrical measuring circuit (8).

3. Device according to Claim 2, characterized in that two further extension measuring elements (73, 74) are arranged on the measuring tube (4) at two opposite points in the neutral zones of the measuring tube and interacting with the measuring circuit (8).

4. Device according to Claim 3, characterized in that each extension measuring element (71-74) comprises a bridge circuit with individual strain gauges.

5. Device according to Claim 4, characterized in that the extension measuring elements (71-74) are parallel-connected electrically.

6. Device according to one of the preceding claims, characterized by a second buoyancy body (106), a second coupling rod (105) coupled with it kinematically, and a corresponding second measuring tube (104) having at least one extension measuring element (171), while the measuring circuit (8) interacts with the extension measuring element (171) of the second measuring tube (104) also and is designed to yield a level signal uninfluenced by the specific weight of the liquid medium (M) in the container (B).

## Revendications

1. Dispositif de mesure du niveau d'un milieu liquide dans un récipient, qui comporte un flotteur (6) immergé plus ou moins dans le milieu liquide (M) en fonction du niveau de celui-ci, et, un convertisseur de mesure (4, 5, 71-74, 8) qui transforme la force portante agissant sur le flotteur en fonction du niveau du milieu liquide en un signal électrique indiquant une mesure du niveau du milieu liquide dans le récipient (B)
*caractérisé en ce que*
- le convertisseur de mesure (4, 5, 71-74, 8) se compose pour l'essentiel d'un tube de mesure (4) droit encastré d'un côté et d'une baguette de couplage (5) coaxiale au tube de mesure également encastré d'un côté, où l'une des extrémités (41) du tube de mesure (4) est bridée de manière étanche et sans possibilité de mouvement dans une ouverture latérale (2) du récipient (B) tandis que l'autre extrémité (42), libre, du tube de mesure (4) est obturée de manière étanche et résistant à la pression, et, où la baguette de couplage (5) est assemblée par l'une de ses extrémités (51) sans possibilité de mouvement avec l'extrémité libre (42) du tube de mesure (4) tandis que son autre extrémité (52), libre, pénètre par l'ouverture latérale (2) dans le récipient (B),
- le flotteur (6) est assemblé avec l'extrémité libre (52) de la baguette de couplage (5) de telle manière que la force portante agissant sur le flotteur (6) en fonction du niveau du milieu liquide est transmise à la baguette de couplage (5) et de celle-ci au tube de mesure (4) qui est plus ou moins déformée en fonction du niveau du milieu liquide,
- pour saisir la déformation du tube de mesure (4), au moins un extensomètre (71) est disposé sur le tube de mesure (4),
- le convertisseur de mesure (4, 5, 71-74, 8) comporte au moins un interrupteur électrique à lame (8) qui coopère avec l'extensomètre (71) et qui produit un signal électrique correspondant à la déformation du tube de mesure (4) et par conséquent au niveau du milieu liquide (M) dans le récipient (B).

2. Dispositif selon la revendication 1 *caractérisé par* deux extensomètres (71), (72) disposés sur le tube de mesure (4) dans la zone d'extension / de contraction et coopérant avec l'interrupteur électrique à lame (8).

3. Dispositif selon la revendication 2 *caractérisé par* deux extensomètres supplémentaires (73), (74) qui sont disposés sur le tube de mesure (4) en se faisant face, dans les zones neutres dudit tube de mesure, et qui coopèrent avec l'interrupteur électrique à lame (8).

4. Dispositif selon la revendication 3 *caractérisé en ce que* chaque extensomètre (71 à 74) est constitué de fils d'acier montés en pont.

5. Dispositif selon la revendication 4 *caractérisé en ce que* le montage électrique des extensomètres (71 à 74) est effectué en parallèle.

6. Dispositif selon l'une des revendications précédentes *caractérisé en ce que*
- il comprend un second flotteur (106) et une seconde baguette de couplage (105) couplé cinématiquement avec le flotteur (106) ainsi qu'un second tube de mesure (104) correspondant pourvu d'au moins un extensomètre (171),
- l'interrupteur à lame électrique (8) coopère également avec l'extensomètre (171) du second tube de mesure et est conformé pour produire un signal du niveau du milieu (M) indépendamment du poids spécifique dudit milieu dans le récipient (B).
